Europäisches Patentamt

European Patent Office

Office européen des brevets

(11) Numéro de publication: **0 171 332**
**A1**

(12) **DEMANDE DE BREVET EUROPEEN**

(21) Numéro de dépôt: 85401567.4

(22) Date de dépôt: 31.07.85

(51) Int. Cl.⁴: **G 06 F 15/46**

(30) Priorité: 07.08.84 FR 8412464

(43) Date de publication de la demande: 12.02.86
Bulletin 86/7

(84) Etats contractants désignés: **DE GB IT**

(71) Demandeur: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Bornes, Pierre, 9, Ailée Renoir, F-91410 Dourdan (FR)**
Inventeur: **Dechatre, Alain, 38, rue Hoche, F-91700 Sainte Genevieve des Bois (FR)**
Inventeur: **Garie, Thierry, 167, Avenue de la Résistance, F-92350 Le plessis Robinson (FR)**

(74) Mandataire: **Mongrédien, André et al, c/o BREVATOME 25, rue de Ponthieu, F-75008 Paris (FR)**

(54) **Système de controle d'un procédé industriel.**

(57) Le système de contrôle de l'invention comprend un calculateur de contrôle (2), des moyens périphériques (10, 12, 14) gérés par ledit calculateur de contrôle, un ensemble de capteurs (16, 20) pour connaître l'état du procédé et un ensemble d'actionneurs (18, 22) pour modifier l'état du procédé et un calculateur d'interface (4) surveillant l'état du procédé, le calculateur de contrôle (2) étant apte à fonctionner sous les modes suivants: mode paramétrage pour engendrer dans le système une représentation du procédé à contrôler, mode conduite pour piloter le procédé conformément à sa représentation, mode simulation pour tester le système en l'absence de capteurs et d'actionneurs connectés, et mode historique pour analyser en différé les signaux délivrés par les capteurs en mode conduite.

<u>Système de contrôle d'un procédé industriel</u>

La présente invention a pour objet un système de contrôle d'un procédé industriel. Il est destiné à la surveillance et à la téléconduite d'un procédé industriel classique de moyenne importance, c'est-à-dire comprenant environ 500 à 1000 capteurs ou actionneurs.

L'avantage du système de contrôle de l'invention réside dans l'ensemble des fonctions proposées et en particulier en ce que :

- des moyens sont prévus pour assurer la sécurité de la conduite du procédé en vue de la protection des personnes et des biens ; ceci est obtenu notamment par le filtrage par le système des commandes demandées par un opérateur du système,

- le système est apte à gérer un parc d'appareils de mesure programmables destinés à contrôler le procédé ; ceci constitue une simplification par rapport à l'art connu où les appareils de mesure programmables sont programmés séparément et n'ont pas de liens entre eux,

- des moyens sont prévus pour faciliter la création interactive des synoptiques de représentation du procédé à contrôler.

De manière plus précise, l'invention a pour objet un système de contrôle d'un procédé industriel comprenant :

- un calculateur de contrôle,

- des moyens d'impression gérés par le calculateur de contrôle pour l'impression de messages de modification d'état du procédé,

- des moyens de visualisation gérés par le calculateur pour représenter un synoptique fonctionnel d'au moins une partie du procédé,

- des moyens de commande pour commander le calculateur de contrôle,

B 8248.3 BL

2  0171332

- un ensemble de capteurs pour connaître l'état du procédé et un ensemble d'actionneurs pour modifier l'état du procédé,
- un calculateur d'interface relié d'une part aux capteurs et aux actionneurs et d'autre part au calculateur de contrôle, ledit calculateur d'interface surveillant l'état du procédé en analysant l'état des capteurs et commandant les actionneurs pour modifier l'état du procédé en fonction de signaux reçus du calculateur de contrôle, ledit calculateur de contrôle étant apte à fonctionner sous les modes suivants, le mode choisi étant spécifié audit calculateur de contrôle par les moyens de commande :
  - mode paramétrage, dans lequel le calculateur de contrôle modélise le procédé à contrôler en fonction des données délivrées par les moyens de commande, détermine les capteurs et actionneurs utilisés et engendre les synoptiques de représentation,
  - mode conduite, dans lequel le calculateur de contrôle anime les synoptiques conformément à l'état du procédé, enregistre les modifications de l'état du procédé, filtre les commandes demandées par les moyens de commande et pilote le calculateur d'interface,
  - mode simulation, dans lequel les signaux destinés aux actionneurs sont réinjectés sur les entrées du calculateur d'interface à la place des signaux délivrés par les capteurs,
  - mode historique, dans lequel des signaux délivrés par les capteurs et enregistrés en mode conduite sont réinjectés sur les entrées du calculateur d'interface.

Selon une caractéristique préférée, le calculateur d'interface est apte à élaborer au moins un signal de synthèse représentatif de l'état de N capteurs, où N > 1, ledit signal de synthèse étant délivré au calculateur de contrôle.

Ceci permet de comprimer l'information représentée par les signaux fournis par les capteurs.

Selon une caractéristique secondaire, ledit signal de synthèse représente une fonction du procédé.

Selon une autre caractéristique préférée, le calculateur de contrôle est apte, en mode paramétrage, à programmer les graphes de commande décrivant le procédé et les appareils de mesure programmables de contrôle du procédé. Un graphe de commande est un graphe représentant un ensemble de commandes élémentaires et les relations qu'il peut exister entre elles (délais, priorité) et qui, ensemble, forment une commande complexe.

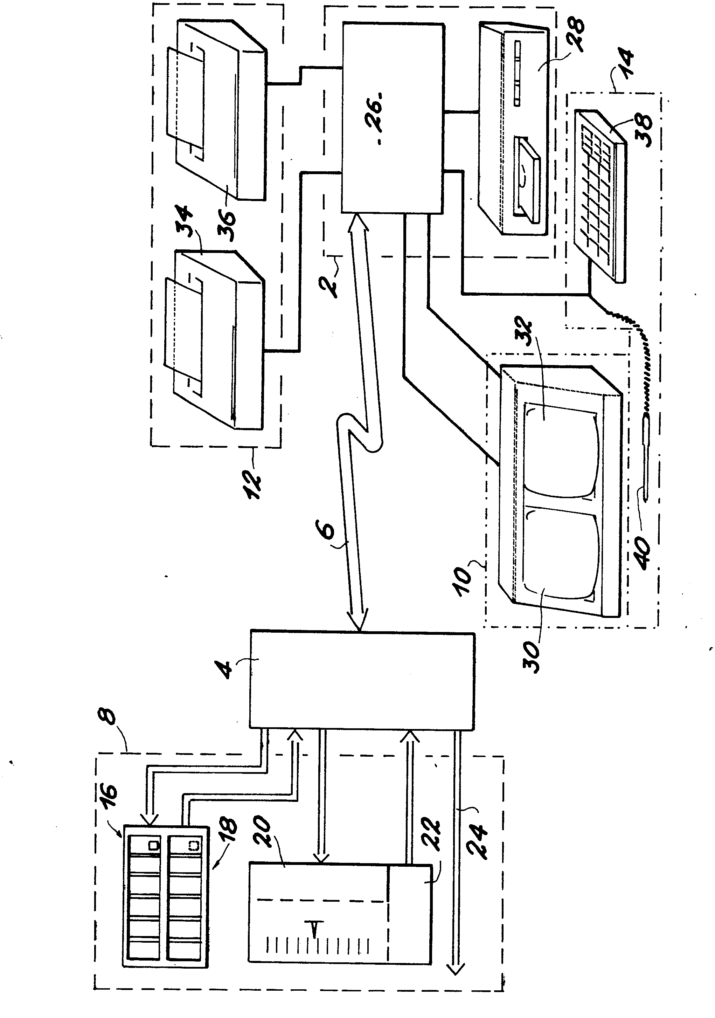

Les caractéristiques et avantages de l'invention ressortiront mieux de la description qui va suivre, donnée à titre illustratif mais non limitatif, en référence à l'unique figure annexée représentant l'architecture du système de contrôle de l'invention.

Ce système de contrôle comprend un calculateur de contrôle 2, un calculateur d'interface 4 relié au calculateur de contrôle par un bus 6, des moyens 8 de contrôle et de commande du procédé reliés au calculateur d'interface 4, des moyens de visualisation 10 gérés par le calculateur de contrôle, des moyens d'impression 12 gérés par le calculateur de contrôle et des moyens de commande 14 gérés par le calculateur de contrôle.

Le moyen 8 de contrôle et de commande comporte plusieurs types d'éléments. Il comprend des télécommandes 16, c'est-à-dire des actionneurs tout-ou-rien pour commander par exemple l'ouverture ou la fermeture d'une porte ou d'une vanne ; une télésignalisation 18 est associée à chaque télécommande pour en contrôler son état.

B 8248.3 BL

0171332

Le moyen 8 comprend également des téléréglages analogiques 20, par exemple pour commander une variation de température ; une télémesure 22 est associée à chaque téléréglage 20 pour contrôler le niveau de la grandeur physique fixée par le téléréglage.

Le moyen 8 peut enfin comprendre un bus 24, par exemple au standard IEEE 488, pour le contrôle de l'instrumentation programmable du procédé. Ce bus permet également la programmation de l'instrumentation programmable directement par le calculateur de contrôle 2.

Un des avantages du système de contrôle de l'invention consiste en la répartition des fonctions de surveillance et d'exécution des commandes, c'est-à-dire du niveau bas, et des fonctions de représentation, élaboration des commandes et gestion des périphériques, c'est-à-dire du niveau haut, sur deux calculateurs. Ceci permet une extension éventuelle du système par la duplication du calculateur d'interface 4 (niveau bas) tout en préservant les performances du système.

Inversement, si on choisit un système d'exploitation identique pour le calculateur de contrôle et le calculateur d'interface, on peut dans le cas d'applications mettant en oeuvre peu de capteurs et d'actionneurs, regrouper l'ensemble des fonctions du système sur un seul calculateur.

On va maintenant décrire un mode de réalisation de chacun des calculateurs du système.

Le calculateur d'interface 4 assure la surveillance et l'exécution des commandes nécessaires au contrôle du procédé. Il peut être constitué d'un ensemble de cartes industrielles au format MULTIBUS (standard IEEE 796) telles que :

- une unité centrale iSBC 86/30 comprenant un microprocesseur 8086/8087, 256 K octets de mémoire vive (RAM) et 64 K octets de mémoire morte (ROM),

- une carte de télécommunication pour communiquer avec le calculateur de contrôle 2, cette carte assurant une transmission sous protocole HDLC,
- des modules d'interface dont le nombre est fonction du procédé à contrôler et comprenant notamment une carte iSBX 488 pour le contrôle du bus IEEE 488, des cartes iSBX 311 et iSBX 328 pour la gestion des entrées et sorties analogiques, et un port parallèle pour la gestion des entrées et sorties de type tout-ou-rien.

Le calculateur de contrôle 2 assure les fonctions de niveau haut du système. Ce sont notamment les fonctions de :
- représentation de l'état du procédé,
- commande du procédé, en mode manuel ou automatique,
- gestion des périphériques.

Il est constitué d'un moyen de calcul 26 et d'une mémoire de masse 28. Le moyen de calcul 26 comprend un ensemble de cartes industrielles au format MULTIBUS :
- une unité centrale iSBC 86/30,
- une carte d'extension mémoire de 512 K octets,
- un coupleur de disques iSBC 215/218,
- une carte de télécommunication identique à la carte de télécommunication du calculateur d'interface 4,
- deux cartes de couplage vidéo couleur alphanumérique et semi-graphique.

La mémoire de masse 28 comprend un disque dur WINCHESTER ayant une capacité de 35 M octets et une unité de disquette au format 8 pouces.

Le calculateur de contrôle 2 assure notamment la gestion des périphériques comprenant des moyens de visualisation 10, des moyens d'impression 12 et des moyens de commande 14. Les moyens de visualisation 10 sont constitués de deux moniteurs couleur 30, 32 à hau-

0171332

te résolution permettant l'affichage de 53 lignes et 80 colonnes ou l'affichage de graphiques symbolisant le procédé à contrôler. Les moyens d'impression comprennent deux imprimantes 34, 36 ayant une vitesse de frappe de 160 caractères par seconde, l'une servant de journal pour l'impression des messages de modification d'état du procédé, l'autre étant utilisée pour la sortie de tableaux de résultats.

Enfin, les moyens de commande 14 qui permettent le dialogue entre le système et un opérateur comprennent par exemple un clavier 38 et un crayon optique 40.

Outre la fonction de gestion de ces périphériques, le calculateur de contrôle 2 assure aussi les fonctions de représentation de l'état du procédé et de commande du procédé. Selon une caractéristique du système de contrôle de l'invention, cette gestion du procédé est une gestion fonctionnelle.

La détermination de l'état du procédé exploite différentes notions permettant une description fonctionnelle de ce procédé :

- des variables d'entrée simples correspondant à un unique actionneur physique, telles qu'une télésignalisation ou une télémesure,
- des variables de synthèse obtenues par association de variables simples ; ces variables permettent la création de pseudocapteurs fonctionnels,
- des objets internes de représentation permettant une description fonctionnelle du procédé. Ces objets peuvent avoir plusieurs états et prennent en compte plusieurs variables simples ou de synthèse,
- des groupes de synthèse permettant l'affectation des variables internes à des niveaux de surveillance et d'alarme.

La différence entre les différents types de variables apparaîtra clairement sur l'exemple simple

suivant. On considère une pièce comprenant trois portes. A chaque porte est associée une télésignalisation, c'est-à-dire une variable simple, indiquant si la porte est ouverte ou fermée. Les états de ces trois télésignalisations peuvent être traduits en une seule variable de synthèse indiquant si l'accès à la pièce est possible (l'une des portes au moins est ouverte) ou impossible (toutes les portes sont fermées). Cette variable de synthèse est une variable fonctionnelle d'accès à la pièce.

La commande du procédé s'appuie également sur un découpage fonctionnel. Ce découpage comprend les commandes simples, les commandes complexes et les objets de la commande.

Les commandes simples correspondent à l'activation d'un actionneur tel qu'une télécommande ou un téléréglage. Les commandes complexes sont des associations de plusieurs commandes simples résultant en des actions multiples et simultanées sur des procédés.

Les objets de la commande sont des objets du procédé caractérisé par des états différents et une liste d'action permettant de placer ces éléments du procédé dans un des états. Une action peut éventuellement résulter en plusieurs commandes simples et/ou correspondre à la mise en oeuvre d'un graphe de commande automatique.

On va maintenant décrire le fonctionnement du système de contrôle de l'invention. Ce système est apte à fonctionner sous quatre modes de fonctionnement qui sont :

- le mode paramétrage, qui permet de créer de manière interactive une représentation du procédé,

- le mode conduite, qui permet de surveiller et de télécommander le procédé,

- le mode simulation, qui permet de tester les réponses du système de contrôle à certaines situations,

- et le mode historique, qui permet d'examiner en différé les évolutions de l'état du procédé.

Si le système d'exploitation du calculateur de contrôle 2 permet un traitement multitâche, plusieurs modes peuvent être exécutés simultanément par le système. Notamment, il est possible de commander le procédé (mode conduite) et simultanément de tester le système (mode simulation). Cependant, certains des modes sont nécessairement exclusifs tels que le mode paramétrage et le mode conduite.

On va maintenant décrire en détail chacun des modes de fonctionnement du système de contrôle de l'invention.

1) - LE MODE PARAMÉTRAGE

Ce mode permet la personnalisation du système de contrôle de l'invention à une application déterminée. Cette action de paramétrage est commandée par l'opérateur depuis le clavier 38 et le crayon optique 40. Il consiste principalement à :

a) - affecter et caractériser les voies d'entrée et sortie du système, c'est-à-dire les voies entre le moyen 8 et le calculateur d'interface 4. Pour cela, on définit pour chaque type d'entrée-sortie élémentaire (télécommande, télésignalisation, téléréglage ou télémesure) des caractéristiques telles que la cadence de scrutation du signal délivré par un capteur, l'état (au repos ou actif) d'un actionneur, le délai d'exécution d'une commande d'un actionneur, l'appartenance à un niveau d'alarme du signal délivré par un capteur, le seuil de fonctionnement et le seuil de sécurité des signaux lus ou délivrés, etc...

0171332

Les caractéristiques des voies sont définies par l'opérateur. Elles sont transmises par le calculateur de contrôle 2 au calculateur d'interface 4 qui les mémorise.

b) - modéliser l'installation en vue de sa représentation et de sa commande par le calculateur de contrôle. On définit ainsi des objets de représentation pouvant avoir plusieurs états caractérisés par des équations de type logique et des objets de commande auxquels sont associées des listes d'actions.

Cette modélisation peut conduire à définir des pseudo-capteurs par combinaison de télésignalisations élémentaires ou par applications d'algorithmes de prétraitement à télémesures élémentaires.

c) - créer les synoptiques de représentation. Le nombre de synoptiques est quelconque. Cette création est faite en mode interactif et est facilitée par l'usage de bibliothèques de symboles contenues dans le moyen de mémorisation 28. Les synoptiques en cours de création sont reproduits sur l'un des moniteurs 30, 32. Ils peuvent être modifiés en temps réel soit par l'intermédiaire du clavier 38, soit par l'intermédiaire du crayon optique 40.

d) - déclarer les règles d'animation des synoptiques. Ceci consiste à associer à chaque élément du synoptique un ensemble de formes et de couleurs pour représenter les différents états de cet élément. Par exemple si cet élément est une vanne, elle pourra être représentée en rouge pour indiquer qu'elle est fermée et en vert, pour indiquer qu'elle est ouverte. Une représentation différente par exemple de type clignotant pourra indiquer une défaillance de la vanne (fuite, grippage, ...).

B 8248.3 BL

e) - décrire les graphes de commande dans le cas d'un contrôle automatique du procédé. Ces graphes sont décrits dans un langage adapté à la modélisation du contrôle d'une installation tel que le langage GRAFCET. Les instructions disponibles permettent de :

. gérer les transitions et étapes du graphe,

. activer et désactiver des branches de graphe concurrentes,

. émettre des commandes,

. gérer des temporisations,

. tester des variables,

. acquérir et gérer des données,

. émettre et recevoir des informations opérateur,

. etc...

Cette description peut être facilitée par une décomposition, lorsqu'elle est possible, d'un graphe général en différents sous-graphes indépendants réalisant ainsi des automates locaux pouvant s'exécuter simultanément en mode conduite.

2) - LE MODE CONDUITE

Dans ce mode de fonctionnement, le calculateur d'interface exécute les fonctions de surveillance du procédé et le calculateur de contrôle les fonctions de télécommande du procédé.

a) - Surveillance_du_procédé

Chaque voie physique reliée à un capteur est scrutée périodiquement. Le système supporte plusieurs cadences de scrutation différentes (paramétrables) et l'affectation des différentes voies à chacune de ces cadences permet d'optimiser la charge globale et le temps de réponse à un évènement. Cette scrutation entraîne l'exécution de différents traitements tels que :

. filtrage éventuel du signal reçu,

. détection de changement d'état d'une télécommande,

. détection de défaillance d'un capteur,

. calcul des variables de synthèse à partir de plusieurs variables simples,

. calcul de l'état des attributs affectés à chaque variable (défaut, hors ·seuil, etc...),

. etc...

Ces informations sont interprétées par le calculateur de contrôle qui assure l'animation des synoptiques, la progression éventuelle dans le graphe de commande, l'enregistrement des évènements sur le disque dur du moyen de mémorisation 28 et l'impression éventuelle de messages sur l'une des imprimantes 34, 36.

b) - Télécommande_du_procédé

Les commandes nécessaires à la conduite du procédé peuvent être engendrées par des interventions de l'opérateur, la commande est alors manuelle, ou par exécution d'instructions de séquences automatiques préprogrammées, la commande est alors automatique. La commande manuelle peut bénéficier de la possibilité de construction d'automates indépendants, c'est-à-dire de graphes de commandes indépendants, permettant de faciliter les interventions de l'opérateur en conservant la souplesse apportée par ce mode de fonctionnement.

Selon une caractéristique du système de contrôle de l'invention, la fiabilité et la sécurité de téléconduite d'une installation sont assurées d'une part par le filtrage des commandes de l'opérateur, et

d'autre part, par le contrôle de l'exécution des commandes.

Le filtrage consiste à présenter sous forme d'un menu affiché sur l'un des moniteurs 30, 32, les seules commandes autorisées en fonction de l'état du procédé. Ce menu mis à jour dynamiquement ne présente à l'opérateur que les actions possibles sur les objets du procédé à chaque instant.

Le contrôle de l'exécution des commandes se fait en vérifiant la cohérence des télésignalisations affectées par ces commandes. En cas de non exécution d'une commande dans le délai prévu, un message d'acquit négatif est présenté à l'opérateur et simultanément transmis pour impression à l'imprimante éditant le journal.

3) - LE MODE SIMULATION

Ce mode de fonctionnement permet d'assurer un bouclage de type logique entre les télécommandes et les télésignalisations associées en l'absence de couplage physique au procédé. Ceci permet notamment de tester en toute sécurité le comportement du système dans des états du procédé qui peuvent être délicats à obtenir en réalité et dangereux. Ceci permet également de définir par des essais successifs des suites de commande ramenant le procédé d'un état anormal et dangereux à un état nominal. Un autre intérêt du mode simulation est de positionner à partir du clavier 38 l'état d'une télésignalisation indépendamment de l'état déterminé par scrutation du signal du capteur.

Ces possibilités peuvent être efficacement utilisées lors du test de la personnalisation du système à une application, le procédé n'étant pas physiquement couplé au système, et en cours de conduite ou lors des opérations de maintenance

lorsqu'une partie du procédé doit être déconnectée sans interdire le contrôle du reste de l'installation.

4) - LE MODE HISTORIQUE

Dans ce mode de fonctionnement, on remplace les signaux reçus des capteurs par le calculateur d'interface 4 par des signaux mémorisés dans le moyen de mémorisation 28 et qui sont des signaux reçus des capteurs par le système en mode conduite.

Le mode historique permet donc d'examiner en différé les évolutions de l'état du procédé et constitue une aide au diagnostic.

En conclusion, le système de contrôle de l'invention est un outil très souple et très performant de contrôle d'un procédé industriel par sa configuration et l'ensemble des fonctions dont il dispose. Sa modularité permet une adaptation optimum à la complexité de l'installation contrôlée.

## REVENDICATIONS

1. Système de contrôle d'un procédé industriel, caractérisé en ce qu'il comprend :
- un calculateur de contrôle (2),
- des moyens d'impression (12) gérés par le calculateur de contrôle pour l'impression de messages de modification d'état du procédé,
- des moyens de visualisation (10) gérés par le calculateur pour représenter un synoptique fonctionnel d'au moins une partie du procédé,
- des moyens de commande (14) pour commander le calculateur de contrôle,
- un ensemble de capteurs (16, 20) pour connaître l'état du procédé et d'actionneurs (18, 22) pour modifier l'état du procédé,
- un calculateur d'interface (4) relié d'une part aux capteurs et aux actionneurs et d'autre part au calculateur de contrôle, ledit calculateur d'interface surveillant l'état du procédé en analysant l'état des capteurs et commandant les actionneurs pour modifier l'état du procédé en fonction de signaux reçus du calculateur de contrôle, ledit calculateur de contrôle étant apte à fonctionner sous les modes suivants, le mode choisi étant spécifié audit calculateur de contrôle par les moyens de commande (14),
- mode paramétrage, dans lequel le calculateur de contrôle modélise le procédé à contrôler en fonction des données délivrées par les moyens de commande, détermine les capteurs et actionneurs utilisés et engendre les synoptiques de représentation,
- mode conduite, dans lequel le calculateur de contrôle anime les synoptiques conformément à l'état du procédé, enregistre les modifications de l'état du procédé, filtre les commandes demandées par les moyens de commande et pilote le calculateur d'interface,

0171332

- mode simulation, dans lequel les signaux destinés aux actionneurs sont réinjectés sur les entrées du calculateur d'interface à la place des signaux délivrés par les capteurs,

- mode historique, dans lequel des signaux délivrés par les capteurs et enregistrés en mode conduite sont réinjectés sur les entrées du calculateur d'interface.

2. Système de contrôle d'un procédé industriel selon la revendication 1, caractérisé en ce que le calculateur d'interface est apte à élaborer au moins un signal, dit de synthèse, représentatif de l'état de N capteurs, où $N > 1$, ledit signal de synthèse étant délivré au calculateur de contrôle.

3. Système de contrôle d'un procédé industriel selon la revendication 2, caractérisé en ce que ledit signal de synthèse représente une fonction du procédé.

4. Système de contrôle d'un procédé industriel selon l'une quelconque des revendications 1 à 3, caractérisé en ce que le calculateur de contrôle est apte, en mode paramétrage, à programmer les graphes de commande décrivant le procédé.

B 8248.3 BL

0171332

Office européen
des brevets

**RAPPORT DE RECHERCHE EUROPEENNE**

0171332

Numero de la demande

EP   85 40 1567

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int. Cl.4) |
|---|---|---|---|
| A | EP-A-0 077 685   (HONEYWELL) <br> * Revendication 1; figure 2 * <br><br> --- | 1 | G 06 F   15/46 |
| A | US-A-4 303 973   (WILLIAMSON et al.) <br> *  Colonne  1, ligne 45 - colonne 6, ligne 5 * <br><br> --- | 1 | |
| A | US-A-4 234 926   (WALLACE et al.) <br> *    Résumé;     revendications 1-4,10-14,18 * <br><br> ----- | 1 | |

**DOMAINES TECHNIQUES RECHERCHES (Int. Cl.4)**

G 06 F
G 05 B

Le présent rapport de recherche a été établi pour toutes les revendications

| Lieu de la recherche <br> LA HAYE | Date d'achèvement de la recherche <br> 30-09-1985 | KOLBE W.H. Examinateur |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503 03 82